# EUROPEAN PATENT APPLICATION

(11) **EP 1 253 093 A1**
(43) Date of publication of application: **30.10.2002**
(21) Application number: 02076636.6
(22) Date of filing: 24.04.2002
(51) Int. Cl.: B65G 45/22

(54) **Conveying system, and cleaning device and method for cleaning a conveyor belt**

(30) Priority: 24.04.2001 NL 1017930
(71) Applicant: Machinefabriek "Brabant"D. van Opstal B.V., 4825 BD Breda (NL)
(72) Inventor: van Opstal, Frank Mattheus Maria, 4904 MS Oosterhout (NL)
(74) Representative: Prins, Adrianus Willem

(57) **Abstract**

A conveying system, provided with a conveyor belt and a cleaning device for cleaning at least a returning part (10) of the conveyor belt (1,10), wherein the cleaning device is provided with air extraction (2,3) means for drawing in air along said returning part (10), which extraction means (2,3), during use, generate an air flow along the surface of the returning part (10), such that this air flow removes and carries along material, such as dust and/or bulk transport material, from the returning part (10) of the belt (1,10).

## Description

The invention relates to a conveying system, provided with a conveyor belt and a cleaning device for cleaning the conveyor belt.

Such a system is known from practice and serves for conveying certain goods, in particular products such as bulk goods. As a rule, the conveyor belt is provided with a conveying part and a returning part. During use, material, such as dust, contaminants and/or product material, may adhere to the conveyor belt. Such an accumulation of material is undesired because it can hinder the functioning of the conveying system. It may for instance slow down the conveying movement of the conveyor belt. Moreover, such material can end up between moving parts of the conveying system, which can lead to wear and damage thereof. An additional drawback when transporting bulk material is that an undesirably large amount of this material may be lost as it adheres to the belt.

The above-mentioned cleaning device of the belt is destined to remove material adhering to the belt and comprises a scraper which scrapes the material from the returning part of the belt.

A drawback of the known conveying system is that generally, the cleaning device has to make mechanical contact with the belt to clean the belt. This may lead to wear of and damage to the belt and the cleaning device itself. Therefore, relatively high costs are involved in the use of such a cleaning device. This wear is intensified at a relatively high conveying velocity of the conveying belt. Therefore, to prevent damage to the belt and the cleaning device, the known system can only be used at relatively low conveying velocities.

Furthermore, the cleaning device of the known conveying system is not capable of properly removing material such as dust and/or bulk transport material from the conveyor belt. The cleaning device may for instance not be capable of reaching all parts of the belt properly, for instance when the belt has a slightly curved surface which cannot be completely covered with a straight scraping end of the scraper. As a result, the material may escape the scraper. In particular such material may relatively easily accumulate in the conveying system, which entails the drawbacks already mentioned.

The present invention intends eliminating the drawbacks of the conveying system while maintaining its advantages. In particular, the invention contemplates a conveying system wherein the cleaning device causes relatively little wear and can effect a proper cleaning of the belt. To that end, the conveying system is characterized by the features of claim 1.

As, during use, the extraction means generate an air flow along the surface of the returning part such that this air flow removes and carries along material such as dust and/or bulk transport material from the returning part, the conveyor belt can be cleaned in a simple manner. Furthermore, the cleaning device can effect a relatively good cleaning of the conveyor belt, in particular with regard to dry, relatively small material such as dust and/or bulk material. An additional advantage is that the conveyor belt can be subjected to relatively high conveyor belt velocities while the belt is being cleaned by the cleaning device, without exposing the belt to the relatively high wear a known cleaning device, such as a scraper, can cause at such a velocity. Additionally, wet material, such as mud, having adhered to the conveyor belt, can be dried relatively rapidly by the air flow, whereupon it can relatively easily be sucked from the conveyor belt by the air flow.

A further elaboration of the invention is characterized by the features of claim 2.

The air extraction means are provided with at least one suction mouth for drawing in air, which at least one suction mouth is arranged opposite the returning part mentioned. With the at least one suction mouth, the air can simply be extracted to generate the air flow mentioned.

A very advantageous elaboration of the invention is provided by the features of claim 3.

Since the at least one suction mouth comprises an opening in a covering body, which body is arranged opposite the returning part mentioned and extends substantially parallel thereto, an air flow can be generated which passes over a particular distance along the conveying part mentioned. In this manner, a relatively large portion of the returning part can be cleaned. Preferably, the covering body is arranged adjacent the returning part, such that during use, the air extraction means can create an air flow with a relatively high flow velocity between at least the covering body and the returning part. With the relatively high flow velocity of the air flow, a very good cleaning of at least the returning part mentioned can be achieved. Furthermore, it is thus achieved that the material can easily be carried along by the air flow to prevent accumulation of the material. The air flow velocity can for instance have a value such, as to result in pneumatic transport of the material coming from the belt.

A further elaboration of the invention is characterized by the features of claim 5.

The covering body is wider than the conveyor belt. Thus, with this body, the conveyor belt can be cleaned over substantially the entire width, in particular when the at least one suction mouth opening is at least substantially as wide as the conveyor belt.

A preferred embodiment of the invention is characterized by the features of claim 7.

In this manner, the air flow can flow along the conveyor belt in longitudinal direction, at least via the at least one air flow channel. Then, it is particularly advantageous when the at least one suction mouth opening is located at a distance from longitudinal ends of the at least one air flow channel, so that a part of the air flow flows against the transport direction of the belt. Thus, a very good cleaning of the conveyor belt can be obtained, in that material adhered to the conveyor belt, thus, experiences a relatively large suction force of the counter-directed air flow.

A further elaboration of the invention is provided by the features of claim 11.

With the at least one filter, the material can be filtered from the air in a simple manner. In particular when a large portion of the material consists of conveying material which is to be conveyed by the conveyor belt, it is advantageous when the cleaning device is provided with return conveying means for returning material filtered from the air to a conveying part of the conveyor belt. As a result, during use of the conveying system, relatively little of this material can be lost.

A very advantageous elaboration of the invention is characterized by the features of claim 14.

As the air extraction means, viewed in the conveying direction, are located behind the discharge end, accumulation of material in the conveying system downstream of the discharge end can be avoided. Thus, loss of such material and/or a deceleration of the conveyor belt induced by such an accumulation can be prevented. Preferably, the system is provided adjacent the discharge end with a conventional air suction system with air extraction pump means, while the air extraction means of the cleaning device are connected to these air extraction pump means. Therefore, the cleaning system can simply make use of the pump means of the conventional air suction system, which renders use of the cleaning device relatively inexpensive. Additionally, as a result, assembling the cleaning device can be done relatively simply and rapidly.

The invention further provides a cleaning device which is characterized in that it is destined for use in a conveying system according to the present invention. This cleaning device can clean the conveyor belt of the conveying system very well without causing damage to the belt and/or relatively extensive wear. Additionally, this cleaning device can be relatively easily fitted in the conveying system.

Further, the invention provides a method characterized by the features of claim 18.

In this manner, a good cleaning of the conveyor belt can be obtained, while it sustains only little wear. It is then advantageous when the material sucked from the returning part is filtered from the air flow and is returned to a conveying part of the conveyor belt, so that this material is not lost.

Further elaborations of the invention are described in the subclaims.

The invention will be described with reference to an exemplary embodiment shown in the drawing. In the drawing:
Fig. 1 shows a partly cut-away side view of an exemplary embodiment of the invention;
Fig. 2 shows a bottom view of a part of the side view represented in Fig. 1;
Fig. 3 shows a cross-sectional view along the line III-III of the bottom view represented in Fig. 2.
Fig. 4 shows a cross sectional view along the line IV-IV of the bottom view represented in Fig. 2; and
Fig. 5 shows a detail Q of the cross-sectional view represented in Fig. 4.

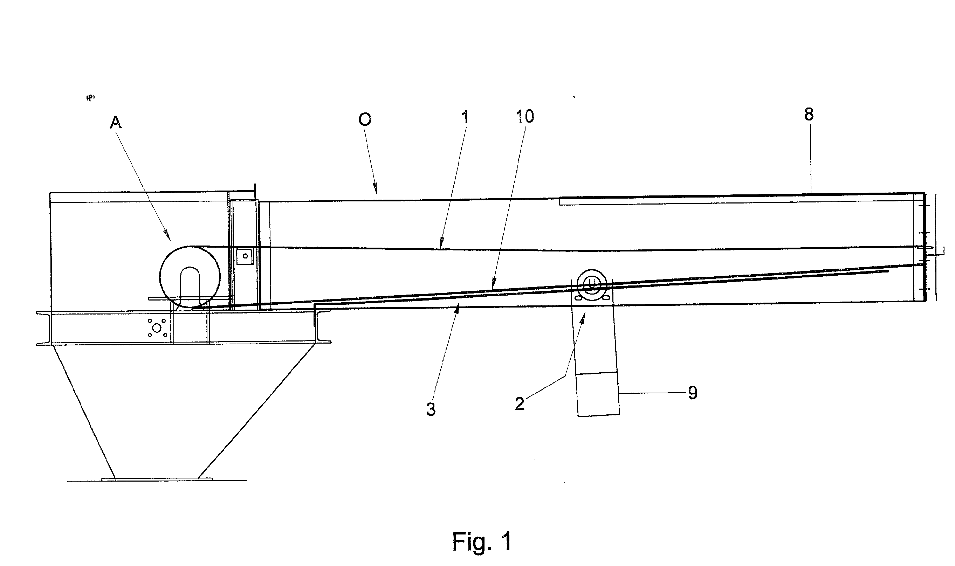

Fig. 1 shows a partly cut-away side view of a conveying system for conveying a product P. The system is provided with a conveyor belt with a conveying part 1 and a returning part 10. The conveying part 1 of the belt serves for conveying the product to a discharge end A. The belt 1, 10 is arranged in a housing 8. The housing 8 is provided with a charge opening O via which the product P can be poured on the conveying part 1 of the belt.

Downstream of the discharge end A, a cleaning device is arranged for the purpose of cleaning the returning part 10 of the conveyor belt. The cleaning device is provided with air extraction means 2, 3 for drawing in air along the returning part 10 mentioned, which extraction means 2, 3, during use, generate an air flow along the surface of the returning part 10 mentioned, such that the air flow removes and carries along material such as dust and/or bulk transport material from the returning part 10 of the belt 1, 10.

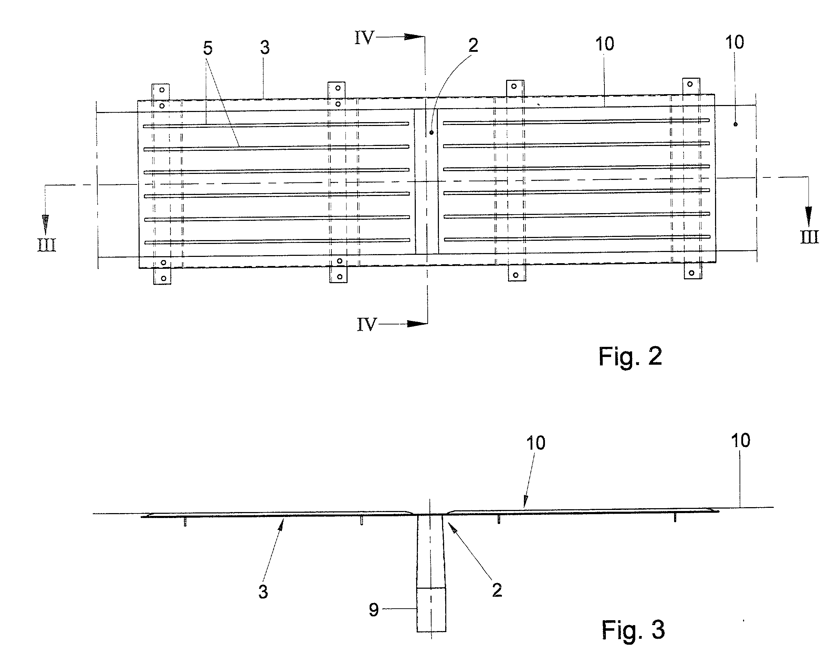

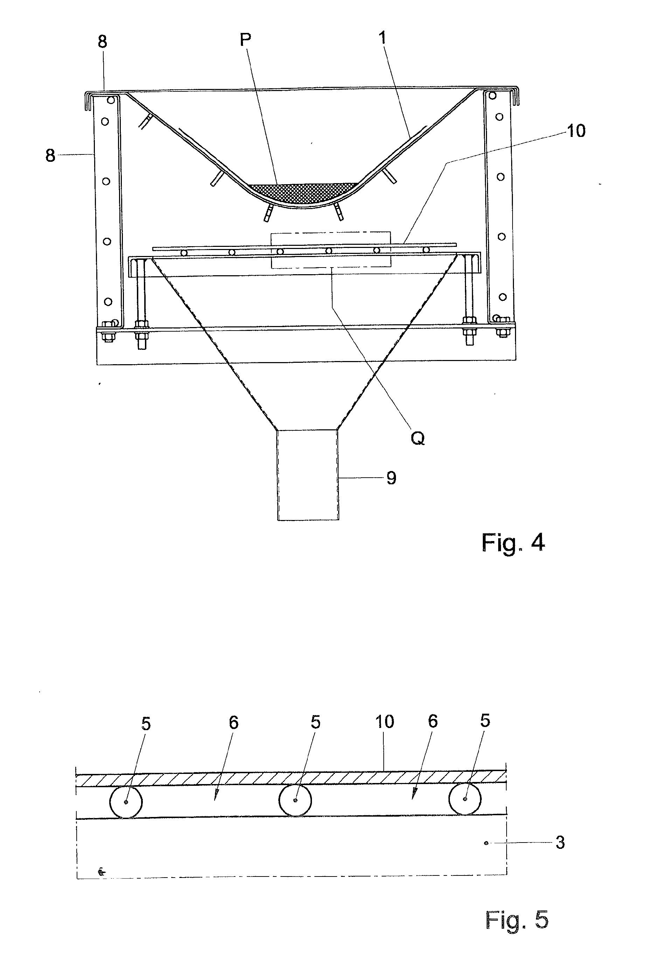

The air extraction means comprise a suction mouth 2, which is designed as a suction mouth opening 2 which is arranged in the middle of a covering body 3. In the present exemplary embodiment, this body is designed as a plate-shaped body 3. Under the suction mouth 2, an exhaust hood 9 is arranged which is connected to suction pump means (not represented) for creating the air flow mentioned. As shown by Figs. 3 and 4, the plate-shaped body 3 is disposed opposite the returning part 10 mentioned and extends substantially parallel thereto. The plate-shaped body 3 is wider than the conveyor belt 1, while the at least one suction mouth opening 2 is at least substantially as wide as the conveyor belt 1. As a result, the belt 1 can be cleaned over the full width with the suction mouth 2.

At the side proximal to the returning part 10 of the conveyor belt, the plate-shaped body 3 is provided with a number of elongated guide elements 5 extending substantially parallel to each other. These guide elements 5 guide the returning part 10. As shown by Fig. 5, the guide elements 5 with the plate shaped body 3 and the returning part 10 bound a number of air flow channels 6. These channels 6 are in air extraction communication with the suction mouth opening 2.

Preferably, the plate-shape body 3 is disposed at a relatively short distance adjacent the returning part 10 mentioned, such that during use the air extraction means 2, 3 can create an air flow with a relatively high flow velocity between at least the plate-shaped body 3 and the returning part 10. This air flow is also determined by the air suction capacity of the pump means connected to the exhaust hood, the width of the conveyor belt and the suction mouth, the length of the plate-shaped body and the type of material which is to be removed from the belt. The desired air flow for obtaining a good cleaning of the belt can simply be obtained by varying these parameters. The air flow velocity can be, for instance, several tens of meters per second. The height of each air flow channel 6, measured between the returning part 10 and the plate-shaped body 3, can for instance be in the range of 0.1 - 10 cm, more in particular in the range of 0.5 - 5 cm. The length of the plate-shaped body 3, measured along the conveying direction of the conveyor belt 1, can for instance be at least 25 cm, in particular at least greater than the width of the belt, more in particular at least thrice the width of the belt.

During use, a product P is poured via the charge opening O of the housing 8 onto the conveying part 1 of the belt, which part 1 subsequently conveys the product P to the discharge end A and discharges it there. Residual material can subsequently be sucked away by the cleaning device from the returning part 10 of the belt located downstream, at least by the creation of the air flow mentioned along that part 10 of the air flow channels 6. The material to be sucked away can for instance comprise dust which has adhered to the conveyor belt. The air extraction means 2, 3 can be provided with at least one filter to filter material contained in the air extracted by these means 2, 3, from the air, so that the material can be collected, for instance, centrally.

If the product P to be transported comprises dry bulk goods, the material to be drawn away can furthermore comprise a portion of the product P, which portion has not been discharged from the belt 1, 10 at the discharge end. In that case, it is advantageous when the cleaning device is provided with the filter mentioned, as well as with return conveyor means for returning material filtered from the air to the conveying part 1 of the belt. As a result, relatively little of the product P can be lost in the conveying system, for instance by accumulation in the housing 8. The filter mentioned can for instance comprise a cyclone separation filter, which is highly suitable for separating material from the air flow.

It is self-evident that the invention is not limited to the exemplary embodiment described. Various modifications are possible within the framework of the invention.

The system can be used in particular with transport of bulk goods such as for instance sand, flour, soil, powder material or such material.

## Claims

1. A conveying system, provided with a conveyor belt and a cleaning device for cleaning at least a returning part (10) of the conveyor belt (1, 10), wherein the cleaning device is provided with air extraction means (2, 3) for drawing in air along said returning part (10), which extraction means (2, 3), during use, generate an air flow along the surface of the returning part (10), such that this air flow removes and carries along material, such as dust and/or bulk transport material, from the returning part (10) of the belt (1, 10).

2. A conveying system according to claim 1, wherein the air extraction means (2, 3) are provided with at least one suction mouth (2) for the purpose of drawing in air, which at least one suction mouth (2) is arranged opposite said returning part (10).

3. A conveying system according to claim 2, wherein the at least one suction mouth comprises an opening (2) in a covering body (3), which body (3) is arranged opposite said returning part (10) and extends substantially parallel thereto.

4. A conveying system according to claim 3, wherein the covering body (3) is arranged adjacent said returning part (10), such that during use the air extraction means (2, 3) can create an air flow with a relatively high flow velocity between at least the covering body (3) and the returning part (10).

5. A conveying system according to any one of claims 3 - 4, wherein the covering body (3) is wider than the conveyor belt (1, 10).

6. A conveying system according to claim 5, wherein the at least one suction mouth opening (2) is at least substantially as wide as the conveyor belt (1, 10).

7. A conveying system according to any one of claims 3 - 6, wherein the covering body is provided with elongated guide means (5), extending substantially parallel to each other, for guiding the returning part, wherein the guide elements (5) with the covering body (3) and the returning part (10) bound at least one longitudinal air flow channel (6), while the at least one air flow channel (6) is in air extraction communication with the at least one suction mouth opening (2).

8. A conveying system according to claim 7, wherein the at least one suction mouth opening (2) is located at a distance from longitudinal ends of the at least one air flow channel (6).

9. A conveying system according to claim 7 or 8, wherein the height of each air flow channel (6), measured between the returning part (10) and the covering body (3), is in the range of 0.1 - 10 cm, more in particular in the range of 0.5 - 5 cm.

10. A conveying system according to any one of the preceding claims, wherein the flow velocity of the air flow along the returning part (10) is at least some meters per second.

11. A conveying system according to any one of the preceding claims, wherein the air extraction means (2, 3) are provided with at least one filter for filtering material, in particular dust and/or bulk transport material present in the air extracted by these means (2, 3), from the air.

12. A conveying system according to claim 11, wherein the cleaning device is provided with return conveying means for returning material filtered from the air to a conveying part (1) of the conveyor belt (1, 10).

13. A conveying system according to claim 11, or 12, wherein the at least one filter comprises a cyclone separation filter.

14. A conveying system according to any one of the preceding claims, wherein the conveyor belt (1, 10) is provided with a discharge end (A) for pouring-off bulk transport material (P), wherein the air extraction means (2, 3), viewed in conveying direction, are located behind the discharge end (A).

15. A conveying system according to claim 14, wherein the system adjacent the discharge end (A) is provided with a conventional air suction system with air extraction pump means, wherein the air extraction means (2, 3) of the cleaning device are connected to these air extraction pump means.

16. A conveying system according to any one of the preceding claims, wherein the conveyor belt (1) is arranged at least partly in a substantially closed housing (8).

17. A cleaning device, evidently intended for use in a conveying system according to any one of the preceding claims.

18. A method for cleaning a conveyor belt, wherein air is drawn in along a returning part (10) of the conveyor belt (1, 10) at a relatively high velocity and flow rate, such that material adhering to the returning part (10) is drawn off therefrom and carried along in the air flow.

19. A method according to claim 18, wherein said velocity is at least 1 m/s, more in particular more than 2 m/s, wherein said flow rate is at least preferably at least several liters per second.

20. A method according to claim 18 or 19, wherein the material sucked from the returning part (10) is filtered from the air flow and is returned to a conveying part (1) of the conveyor belt (1, 10).
